# EUROPEAN PATENT SPECIFICATION

(11) **EP 4 212 808 B1**
(45) Date of publication and mention of the grant of the patent: **04.06.2025**
(21) Application number: 22867557.5
(22) Date of filing: 26.07.2022
(51) Int. Cl.: F26B 23/00, H01M 4/04, F26B 21/08, F26B 21/10, F26B 21/02

(54) **ELECTRODE DRYING SYSTEM**
ELEKTRODENTROCKNUNGSSYSTEM
SYSTÈME DE SÉCHAGE D'ÉLECTRODE

(30) Priority: 08.09.2021 KR 20210120041
(43) Date of publication of application: 19.07.2023
(73) Proprietor: LG Energy Solution, Ltd., Seoul 07335 (KR)
(72) Inventor: KO, Young-Kuk, Daejeon 34122 (KR); MOON, Young-Gyu, Daejeon 34122 (KR); JEON, Shin-Wook, Daejeon 34122 (KR); CHOY, Sang-Hoon, Daejeon 34122 (KR); CHOI, Soon-Sik, Daejeon 34122 (KR)
(74) Representative: Plasseraud IP
(86) International application number: PCT/KR2022/010990
(87) International publication number: WO 2023/038288

(56) References cited:
- EP-A2- 0 413 517
- EP-A2- 1 515 103
- CN-A- 104 344 707
- CN-A- 112 138 964
- CN-U- 212 856 488
- JP-A- 2011 080 718
- JP-A- S57 122 274
- JP-U- S5 389 670
- KR-A- 20130 137 977
- KR-A- 20210 015 278
- KR-A- 20210 050 721
- KR-B1- 101 264 522
- KR-B1- 101 475 429
- US-A- 5 136 790

## Description

### TECHNICAL FIELD

The present application claims priority to Korean Patent Application No. 10-2021-0120041 filed on September 8, 2021 in the Republic of Korea.

The present disclosure relates to an electrode drying system, and more particularly, to an electrode drying system in which energy efficiency may be improved.

### BACKGROUND ART

As technology development and demand for mobile devices have increased, the demand for secondary batteries as energy sources have rapidly increased. A secondary battery essentially includes an electrode assembly as a power generation element. An electrode assembly has a structure in which a positive electrode, a separator, and a negative electrode are stacked at least once, and the positive electrode and the negative electrode are manufactured by applying and drying a positive electrode active material slurry and a negative electrode active material slurry on current collectors formed of an aluminum foil and a copper foil, respectively. KR20210015278A discloses an electrode drying device. CN104344707A discloses a drying furnace equipment for drying treatment of an electrode sheet. CN212856488U discloses a fresh air pretreatment system for an oven for lithium battery manufacturing. JP2011080718A discloses a drying method suitable for drying a coating film, for example, in the process of electrode manufacturing. EP1515103A2 discloses a drying apparatus. EP0413517A2 discloses a control system for an industrial dryer. US5136790 discloses a method and apparatus for drying coated webs.

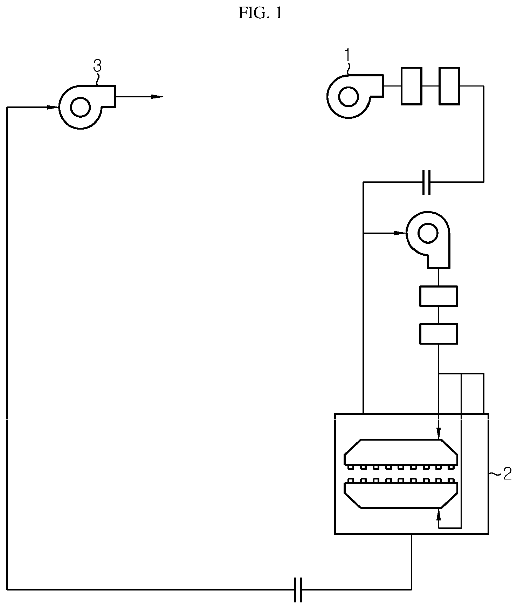

FIG. 1 is a view schematically illustrating a conventional electrode drying system.

Referring to FIG. 1, air supplied through an air supply fan 1 is provided to a drying oven 2 to dry electrodes, and then is discharged to the outside through an exhaust fan 3.

However, because the air discharged to the outside through the exhaust fan 3 after drying the electrodes in the drying oven 2 is high-temperature air, when the high-temperature air is discharged to the outside, a large amount of energy is also discharged, thereby leading to a waste of energy.

Also, because a negative electrode among the electrodes uses water as a solvent, the air discharged to the outside through the exhaust fan 3 after drying the electrodes in the drying oven 2 contains a lot of moisture.

Because a humidity of air supplied to the drying oven 2 is an important factor greatly affecting electrode drying quality along with a temperature, there is a demand for a method of reusing high-temperature and humid air discharged from the drying oven 2 in order to reduce a drying deviation according to a seasonal temperature or humidity difference.

### DISCLOSURE

### Technical Problem

The present disclosure is designed to solve the problems of the related art, and therefore the present disclosure is directed to providing an electrode drying system in which energy efficiency may be improved by reusing at least part of discharged air.

### Technical Solution

The invention is an electrode drying system according to claim 1.

In one aspect of the present disclosure, there is provided an electrode drying system including a drying oven configured to dry a solvent in an electrode active material slurry on an electrode sheet in which the electrode active material slurry is applied to a current collector, an air supply member configured to supply air to the drying oven, and a ventilation member configured to discharge air from the drying oven, wherein at least part of air discharged from the ventilation member is introduced into the air supply member again.

The air supply member and the ventilation member communicate with each other.

The electrode drying system may include a vent member located between the ventilation member and the air supply member and configured to discharge part of air discharged from the ventilation member to outside.

The electrode drying system may include a humidity sensor located between the air supply member and the drying oven, a humidifying member provided to humidify air according to a humidity, and a control member configured to control the humidifying member according to a humidity detected by the humidity sensor.

The electrode drying system may include a temperature sensor located between the air supply member and the drying oven, a heater configured to heat air according to a temperature, and a control member configured to control the heater according to a temperature detected by the temperature sensor.

The electrode drying system may further include a flow rate control valve provided between the ventilation member and the air supply member and configured to control a flow rate of air discharged from the ventilation member.

The flow rate control valve may include at least one of an automatic control valve whose opening rate is automatically controlled by the control member and a manual control valve whose opening rate is manually controlled by an operator.

The vent member may include a first vent member connected to the automatic control valve, wherein the automatic control valve includes a first automatic control valve provided between the ventilation member and the air supply member, and a second automatic control valve provided between the ventilation member and the first vent member, wherein the first automatic control valve and the second automatic control valve are arranged to be orthogonal to each other.

The vent member may include a second vent member connected to the manual control valve, wherein the manual control valve includes a first manual control valve provided between the ventilation member and the air supply member, and a second manual control valve provided between the ventilation member and the second vent member, wherein the first manual control valve and the second manual control valve are arranged to be orthogonal to each other.

The electrode drying system includes a drain member provided between the ventilation member and the air supply member.

The drain member is provided in a drain duct inclined downward from the ventilation member and inclined downward from the air supply member.

### Advantageous Effects

According to embodiments of the present disclosure, at least part of high-temperature and humid air discharged from a ventilation member is introduced into an air supply member and is reused, thereby improving energy efficiency.

### ESCRIPTION OF DRAWINGS

FIG. 1 is a view schematically illustrating a conventional electrode drying system.
FIG. 2 is a view schematically illustrating an electrode drying system, according to an embodiment of the present disclosure.
FIG. 3 is a view illustrating a portion A of FIG. 2, especially illustrating a state where a ventilation member and an air supply member are connected to each other.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when elements are "connected" or "coupled" to each other, the elements may be directly connected or coupled to each other, or may be indirectly connected or coupled to each other with an intervening element therebetween.

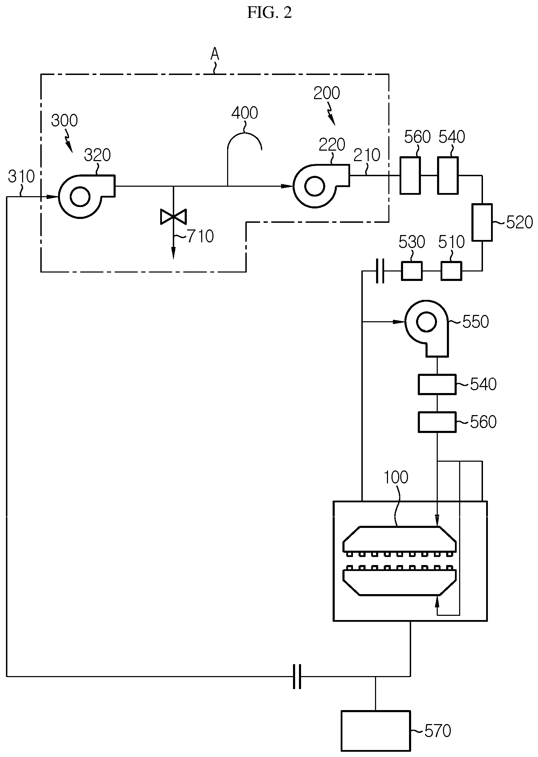

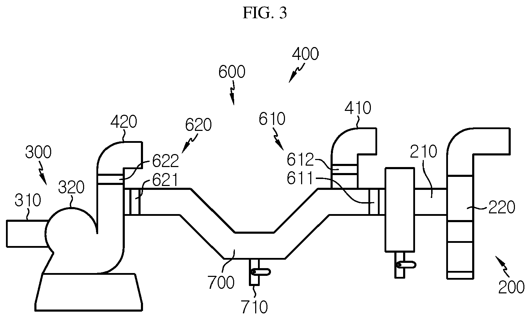

FIG. 2 is a view schematically illustrating an electrode drying system, according to an embodiment of the present disclosure. FIG. 3 is a view schematically illustrating a portion A of FIG. 2, especially illustrating a state where a ventilation member and an air supply member are connected to each other.

Referring to FIGS. 2 and 3, an electrode drying system 10 according to an embodiment of the present disclosure includes a drying oven 100, an air supply member 200, and a ventilation member 300.

The drying oven 100 is provided to dry a solvent in an electrode active material slurry on an electrode sheet (not shown). As described above, a positive electrode and a negative electrode include electrode sheets (not shown) formed by applying electrode active material slurries, that is, a positive electrode active material slurry and a negative electrode active material slurry, on current collectors formed of an aluminum foil and a copper foil, respectively.

Because a solvent corresponding to a liquid component is included in the electrode active material slurry, the solvent included in the electrode active material slurry is dried in the drying oven 100. The drying oven 100 has a receiving space in which an electrode may be accommodated, and when the electrode is accommodated in the receiving space, hot air is sprayed to the electrode to dry the electrode.

The drying oven 100 is connected to the air supply member 200, and receives air from the air supply member 200. Because air supplied to the drying oven 100 through the air supply member 200 is high-temperature and humid air discharged from the ventilation member 300 and introduced into the air supply member 200 again, the air may be used in the drying oven 100.

A humidifying member 520 is provided between the drying oven 100 and the air supply member 200, and air supplied from the air supply member 200 to the drying oven 100 is supplied with moisture by the humidifying member 520 and is sprayed to an electrode when necessary.

Also, a heater 540 is provided between the drying oven 100 and the air supply member 200, and air supplied from the air supply member 200 to the drying oven 100 is heated by the heater 540 and is sprayed to the electrode.

Air supplied from the air supply member 200 to the drying oven 100 to dry the electrode is discharged through the ventilation member 300.

The air supply member 200 supplies air to the drying oven 100. The air supply member 200 may include an air supply duct 210 through which air moves, and an air supply fan 220 coupled to the air supply duct 210. That is, after external air moves to the air supply duct 210 due to an operation of the air supply fan 220, the external air is supplied to the drying oven 100 connected to the air supply duct 210.

The air supply member 200 is connected to the ventilation member 300. That is, the air supply member 200 and the ventilation member 300 communicate with each other, and air supplied from the air supply member 200 to the drying oven 100 to dry the electrode and discharged to the ventilation member 300 may be supplied to the drying oven 100 again through the air supply member 200.

In this case, all of the air discharged from the ventilation member 300 may move to the air supply member 200, or only part of the air discharged from the ventilation member 300 may move to the air supply member 200.

A circulation fan 550 and a filter 560 may be provided between the air supply member 200 and the drying oven 100.

The ventilation member 300 is connected to the air supply member 200, and air moving from the drying oven 100 is discharged through the ventilation member 300. As described above, the ventilation member 300 may be connected to the air supply member 200 and may be configured so that all or part of air discharged through the ventilation member 300 moves to the air supply member 200.

The ventilation member 300 may include an exhaust duct 310 through which air is discharged, and an exhaust fan 320 coupled to the exhaust duct 310. Due to an operation of the exhaust fan 320, air may move from the exhaust duct 310 to the air supply duct 210, or air may be discharged from the exhaust duct 310 to the outside.

Referring to FIGS. 2 and 3, a vent member 400 is located between the ventilation member 300 and the air supply member 200, and is provided to discharge part of air discharged from the ventilation member 300 to the outside. That is, as described above, when the ventilation member 300 is provided so that only part of air discharged from the ventilation member 300 moves to the air supply member 200, the remaining air that does not move to the air supply member 200 is discharged to the outside through the vent member 400.

The vent member 400 may include a first vent member 410 and a second vent member 420. The first vent member 410 is connected to an automatic control valve 610 described below, and the second vent member 420 is connected to a manual control valve 620.

The electrode drying system 10 according to an embodiment of the present disclosure may include a humidity sensor 510, the humidifying member 520, and a control member 570. The electrode drying system 10 may also include a temperature sensor 530 and the heater 540.

The humidity sensor 510 is located between the air supply member 200 and the drying oven 100 and measures a humidity of air moving to the drying oven 100. The humidifying member 520 is provided to humidify air according to the humidity. The control member 570 is provided to control the humidifying member 520 according to the humidity detected by the humidity sensor 510.

The temperature sensor 530 is located between the air supply member 200 and the drying oven 100 and measures a temperature of air moving to the drying oven 100. The heater 540 is provided to heat air according to the temperature. The control member 570 is provided to control the heater 540 according to the temperature detected by the temperature sensor 530.

When the electrode is dried in the drying oven 100, both a temperature and a humidity of air are important factors affecting the quality of the electrode. However, because there is a temperature or humidity difference according to weather or season (in particular, summer and winter), non-drying or over-drying may occur during drying of the electrode.

For example, when both a humidity and a temperature of air are set based on summer, in winter, the humidifying member 520 for increasing a humidity of air supplied to the drying oven 100 is required and the heater 540 for increasing a temperature of air supplied to the drying oven 100 is also required.

However, because both the humidifying member 520 and the heater 540 need energy, the electrode drying system 10 according to an embodiment of the present disclosure moves high-temperature and humid air discharged from the ventilation member 300 to the air supply member 200 again and supplies the air to the drying oven 100 to reuse the air.

However, because the control member 570 controls the humidifying member 520 and the heater 540 according to a humidity and a temperature measured by the humidity sensor 510 and the temperature sensor 530 and uses the humidifying member 520 and the heater 540 only when necessary, the use of the heater 540 and the humidifying member 520 may be reduced, and thus, power consumption by the heater 540 and the humidifying member 520 may be reduced, thereby improving energy efficiency.

Referring to FIG. 3, a flow rate control valve 600 is provided between the ventilation member 300 and the air supply member 200 to control a flow rate of air discharged from the ventilation member 300.

The flow rate control valve 600 may include at least one of the automatic control valve 610 whose opening rate is automatically controlled by the control member 570 and the manual control valve 620 whose opening rate is manually controlled by an operator.

The automatic control valve 610 may include a first automatic control valve 611 and a second automatic control valve 612. The first automatic control valve 611 is provided between the ventilation member 300 and the air supply member 200. The second automatic control valve 612 is provided between the ventilation member 300 and the first vent member 410.

The first automatic control valve 611 and the second automatic control valve 612 may be orthogonal to each other, accurately move air in any one of a direction in which the air is discharged to the outside and a direction in which the air is supplied to the drying oven 100.

The manual control valve 620 may include a first manual control valve 621 and a second manual control valve 622. The first manual control valve 621 is provided between the ventilation member 300 and the air supply member 200. The second manual control valve 622 is provided between the ventilation member 300 and the second vent member 420.

The first manual control valve 621 and the second manual control valve 622 may be orthogonal to each other, to accurately move air in any one of a direction in which the air is discharged from the ventilation member 300 to the outside and a direction in which the air is supplied to the drying oven 100.

Referring to FIG. 3, a drain duct 700 is inclined downward from the exhaust duct 310 of the ventilation member 300, and is also inclined downward from the air supply duct 210 of the air supply member 200.

A drain member 710 is provided between the ventilation member 300 and the air supply member 200 in the drain duct 700.

As described above, because air discharged from the ventilation member 300 is high-temperature and humid air, condensation may occur in various ducts including the air supply duct 210 and the exhaust duct 310 in winter. Also, in order to discharge the condensation, the drain duct 700 is provided between the air supply duct 210 and the exhaust duct 310 and the drain member 710 discharges the condensation through the drain duct 700.

That is, the drain duct 700 for discharging condensation occurring when the ventilation member 300 is connected to the air supply member 200 may not be required when the ventilation member 300 and the air supply member 200 are not connected to each other.

The operation and effect of the electrode drying system 10 according to an embodiment of the present disclosure will be described with reference to the drawings.

Referring to FIG. 2, because the ventilation member 300 and the air supply member 200 communicate with each other, high-temperature and humid air moving to the drying oven 100 through the air supply member 200 to dry an electrode and then discharged to the ventilation member 300 may move to the drying oven 100 again through the air supply member 200 and may be used to dry the electrode.

That is, because air discharged from the ventilation member 300 is reused to dry the electrode, the humidifying member 520 and the heater 540 may be used only when necessary, thereby improving energy efficiency.

### INDUSTRIAL APPLICABILITY

The present disclosure relates to an electrode drying system of a secondary battery, and particularly, may be used in industries related to secondary batteries.

## Claims

1. An electrode drying system (10) comprising:
a drying oven (100) configured to dry a solvent in an electrode active material slurry on an electrode sheet in which the electrode active material slurry is applied to a current collector;
an air supply member (200) configured to supply air to the drying oven (100); and
a ventilation member (300) configured to discharge air from the drying oven (100),
wherein at least part of air discharged from the ventilation member (300) is introduced into the air supply member (200) again;
wherein the air supply member (200) and the ventilation member (300) communicate with each other;
and wherein the electrode drying system (10) further comprises a drain member (710) provided between the ventilation member (300) and the air supply member (200),
**characterized in that**
the drain member (710) is provided in a drain duct (700) inclined downward from the ventilation member (300) and inclined downward from the air supply member (200).

2. The electrode drying system (10) according to claim 1, comprising a vent member (400) located between the ventilation member (300) and the air supply member (200) and configured to discharge part of air discharged from the ventilation member (300) to outside.

3. The electrode drying system (10) according to claim 2, comprising:
a humidity sensor (510) located between the air supply member (200) and the drying oven (100);
a humidifying member (520) provided to humidify air according to a humidity; and
a control member (570) configured to control the humidifying member (520) according to a humidity detected by the humidity sensor (510).

4. The electrode drying system (10) according to claim 2, comprising:
a temperature sensor (530) located between the air supply member (200) and the drying oven (100);
a heater (540) configured to heat air according to a temperature; and
a control member (570) configured to control the heater (540) according to a temperature detected by the temperature sensor (530).

5. The electrode drying system (10) according to claim 1, further comprising a flow rate control valve (600) provided between the ventilation member (300) and the air supply member (200) and configured to control a flow rate of air discharged from the ventilation member (300).

6. The electrode drying system (10) according to claim 5, wherein the flow rate control valve (600) comprises at least one of an automatic control valve (610) whose opening rate is automatically controlled by the control member (570) and a manual control valve (620) whose opening rate is manually controlled by an operator.

7. The electrode drying system (10) according to claim 6, wherein the vent member (400) comprises a first vent member (410) connected to the automatic control valve (610),
wherein the automatic control valve (610) comprises:
a first automatic control (611) valve provided between the ventilation member (300) and the air supply member (200); and
a second automatic control valve (612) provided between the ventilation member (300) and the first vent member (410),
wherein the first automatic control valve (611) and the second automatic control valve (612) are arranged to be orthogonal to each other.

8. The electrode drying system (10) according to claim 6, wherein the vent member (400) comprises a second vent member (420) connected to the manual control valve (620),
wherein the manual control valve (620) comprises:
a first manual control valve (621) provided between the ventilation member (300) and the air supply member (200); and
a second manual control valve (622) provided between the ventilation member (300) and the second vent member (420),
wherein the first manual control valve (621) and the second manual control valve (622) are arranged to be orthogonal to each other.

## Patentansprüche

1. Elektrodentrocknungssystem (10), umfassend:
einen Trocknungsofen (100), welcher dazu eingerichtet ist, ein Lösemittel in einem Elektrodenaktivmaterialschlamm an einer Elektrodenbahn zu trocknen, bei welcher der Elektrodenaktivmaterialschlamm auf einem Stromkollektor aufgebracht ist;
ein Luftzuführelement (200), welches dazu eingerichtet ist, dem Trocknungsofen (100) Luft zuzuführen; und
ein Ventilationselement (300), welches dazu eingerichtet ist, Luft von dem Trocknungsofen (100) abzuführen,
wobei wenigstens ein Teil von Luft, welche von dem Ventilationselement (300) abgeführt wird, wieder in das Luftzuführelement (200) eingeleitet wird;
wobei das Luftzuführelement (200) und das Ventilationselement (300) miteinander kommunizieren;
und wobei das Elektrodentrocknungssystem (10) ferner ein Ablaufelement (710) umfasst, welches zwischen dem Ventilationselement (300) und dem Luftzuführelement (200) bereitgestellt ist,
**dadurch gekennzeichnet, dass** das Ablaufelement (710) in einem Ablaufdurchgang (700) bereitgestellt ist, welcher von dem Ventilationselement (300) nach unten geneigt ist und von dem Luftzuführelement (200) nach unten geneigt ist.

2. Elektrodentrocknungssystem (10) nach Anspruch 1, umfassend ein Lüftungselement (400), welches zwischen dem Ventilationselement (300) und dem Luftzuführelement (200) angeordnet ist und dazu eingerichtet ist, einen Teil von Luft, welche von dem Ventilationselement (300) abgeführt wird, nach außen abzuführen.

3. Elektrodentrocknungssystem (10) nach Anspruch 2, umfassend:
einen Feuchtigkeitssensor (510), welcher zwischen dem Luftzuführelement (200) und dem Trocknungsofen (100) angeordnet ist;
ein Befeuchtungselement (520), welches bereitgestellt ist, um Luft gemäß einer Feuchte zu befeuchten; und
ein Steuerungselement (570), welches dazu eigerichtet ist, das Befeuchtungselement (520) gemäß einer Feuchte zu befeuchten, welche durch den Feuchtigkeitssensor (510) detektiert ist.

4. Elektrodentrocknungssystem (10) nach Anspruch 2, umfassend:
einen Temperatursensor (530), welcher zwischen dem Luftzuführelement (200) und dem Trocknungsofen (100) angeordnet ist;
eine Heizung (540), welche dazu eingerichtet ist, Luft gemäß einer Temperatur zu heizen; und
ein Steuerungselement (570), welches dazu eingerichtet ist, die Heizung (540) gemäß einer Temperatur zu steuern, welche durch den Temperatursensor (530) detektiert ist.

5. Elektrodentrocknungssystem (10) nach Anspruch 1, ferner umfassend ein Flussrate-Steuerungsventil (600), welches zwischen dem Ventilationselement (300) und dem Luftzuführelement (200) bereitgestellt ist und dazu eingerichtet ist, eine Flussrate von Luft zu steuern, welche von dem Ventilationselement (300) abgeführt wird.

6. Elektrodentrocknungssystem (10) nach Anspruch 5, wobei das Flussrate-Steuerungsventil (600) wenigstens eines aus einem automatischen Steuerungsventil (610), dessen Öffnungsrate automatisch durch das Steuerungselement (570) gesteuert wird, und einem manuellen Steuerungsventil (620) umfasst, dessen Öffnungsrate durch einen Bediener manuell gesteuert wird.

7. Elektrodentrocknungssystem (10) nach Anspruch 6, wobei das Lüftungselement (400) ein erstes Lüftungselement (410) umfasst, welches mit dem automatischen Steuerungsventil (610) verbunden ist,
wobei das automatische Steuerungsventil (610) umfasst:
ein erstes automatisches Steuerungsventil (611), welches zwischen dem Ventilationselement (300) und dem Luftzuführelement (200) bereitgestellt ist, und
ein zweites automatisches Steuerungsventil (612), welches zwischen dem Ventilationselement (300) und dem ersten Lüftungselement (410) bereitgestellt ist,
wobei das erste automatische Steuerungsventil (611) und das zweite automatische Steuerungsventil (612) angeordnet sind, um orthogonal zueinander zu sein.

8. Elektrodentrocknungssystem (10) nach Anspruch 6, wobei das Lüftungselement (400) ein zweites Lüftungselement (420) umfasst, welches mit dem manuellen Steuerungsventil (620) verbunden ist,
wobei das manuelle Steuerungsventil (620) umfasst:
ein erstes manuelles Steuerungsventil (621), welches zwischen dem Ventilationselement (300) und dem Luftzuführelement (200) bereitgestellt ist, und
ein zweites manuelles Steuerungsventil (622), welches zwischen dem Ventilationselement (300) und dem zweiten Lüftungselement (420) bereitgestellt ist,
wobei das erste manuelle Steuerungsventil (621) und das zweite manuelle Steuerungsventil (622) angeordnet sind, um orthogonal zueinander zu sein.

## Revendications

1. Système de séchage d'électrode (10) comprenant :
un four de séchage (100) configuré pour sécher un solvant dans une suspension de matériau actif d'électrode sur une feuille d'électrode dans laquelle la suspension de matériau actif d'électrode est appliquée sur un collecteur de courant ;
un élément d'alimentation en air (200) configuré pour alimenter le four de séchage (100) en air ; et
un élément de ventilation (300) configuré pour évacuer l'air du four de séchage (100), dans lequel au moins une partie de l'air évacué de l'élément de ventilation (300) est à nouveau introduite dans l'élément d'alimentation en air (200) ;
dans lequel l'élément d'alimentation en air (200) et l'élément de ventilation (300) communiquent entre eux ;
et dans lequel le système de séchage d'électrode (10) comprend en outre un élément de drainage (710) disposé entre l'élément de ventilation (300) et l'élément d'alimentation en air (200), **caractérisé en ce que** l'élément de drainage (710) est disposé dans un conduit de drainage (700) incliné vers le bas à partir de l'élément de ventilation (300) et incliné vers le bas à partir de l'élément d'alimentation en air (200).

2. Système de séchage d'électrode (10) selon la revendication 1, comprenant un élément d'évent (400) situé entre l'élément de ventilation (300) et l'élément d'alimentation en air (200) et configuré pour évacuer une partie de l'air évacué de l'élément de ventilation (300) vers l'extérieur.

3. Système de séchage d'électrode (10) selon la revendication 2, comprenant :
un capteur d'humidité (510) situé entre l'élément d'alimentation en air (200) et le four de séchage (100) ;
un élément d'humidification (520) prévu pour humidifier l'air selon une humidité ; et
un élément de commande (570) configuré pour commander l'élément d'humidification (520) selon une humidité détectée par le capteur d'humidité (510).

4. Système de séchage d'électrode (10) selon la revendication 2, comprenant :
un capteur de température (530) situé entre l'élément d'alimentation en air (200) et le four de séchage (100) ;
un réchauffeur (540) configuré pour chauffer l'air selon une température ; et
un élément de commande (570) configuré pour commander le réchauffeur (540) selon une température détectée par le capteur de température (530).

5. Système de séchage d'électrode (10) selon la revendication 1, comprenant en outre une soupape de commande de débit (600) disposée entre l'élément de ventilation (300) et l'élément d'alimentation en air (200) et configurée pour commander un débit de l'air évacué de l'élément de ventilation (300).

6. Système de séchage d'électrode (10) selon la revendication 5, dans lequel la soupape de commande de débit (600) comprend au moins une parmi une soupape de commande automatique (610) dont la vitesse d'ouverture est commandée automatiquement par l'élément de commande (570) et une soupape de commande manuelle (620) dont la vitesse d'ouverture est commandée manuellement par un opérateur.

7. Système de séchage d'électrode (10) selon la revendication 6, dans lequel l'élément d'évent (400) comprend un premier élément d'évent (410) raccordé à la soupape de commande automatique (610),
dans lequel la soupape de commande automatique (610) comprend :
une première soupape de commande automatique (611) disposée entre l'élément de ventilation (300) et l'élément d'alimentation en air (200) ; et
une deuxième soupape de commande automatique (612) disposée entre l'élément de ventilation (300) et le premier élément d'évent (410),
dans lequel la première soupape de commande automatique (611) et la deuxième soupape de commande automatique (612) sont agencées de façon à être orthogonales l'une par rapport à l'autre.

8. Système de séchage d'électrode (10) selon la revendication 6, dans lequel l'élément de ventilation (400) comprend un deuxième élément de ventilation (420) raccordé à la soupape de commande manuelle (620),
dans lequel la soupape de commande manuelle (620) comprend :
une première soupape de commande manuelle (621) disposée entre l'élément de ventilation (300) et l'élément d'alimentation en air (200) ; et
une deuxième soupape de commande manuelle (622) disposée entre l'élément de ventilation (300) et le deuxième élément d'évent (420),
dans lequel la première soupape de commande manuelle (621) et la deuxième soupape de commande manuelle (622) sont agencées de façon à être orthogonales l'une par rapport à l'autre.
